# EUROPÄISCHE PATENTSCHRIFT

(11) **EP 2 088 021 B1**
(45) Veröffentlichungstag und Bekanntmachung des Hinweises auf die Patenterteilung: **02.07.2014**
(21) Anmeldenummer: 09000987.9
(22) Anmeldetag: 24.01.2009
(51) Int. Cl.: B60J 5/04, B60J 5/06, E05D 15/10, B60R 13/02

(54) **Abdeckung von Führungsteilen einer Kraftfahrzeugschiebetür**
Cover for guidance sections of a motor vehicle sliding door
Recouvrement de pièces de guidage d'une porte coulissante de véhicule automobile

(30) Priorität: 08.02.2008 DE 102008008128
(43) Veröffentlichungstag der Anmeldung: 12.08.2009
(73) Patentinhaber: GM Global Technology Operations LLC, Detroit, MI 48265-3000 (US)
(72) Erfinder: Ehrhard, Winfried, 64839 Münster (DE)
(74) Vertreter: Strauss, Peter

(56) Entgegenhaltungen:
- WO-A1-2008/095728
- FR-A1- 2 888 870
- US-A- 3 605 338

## Beschreibung

Die vorliegende Erfindung betrifft eine Abdeckeinrichtung von Führungsteilen einer Schiebetür eines Kraftfahrzeugs, die zumindest in Schließstellung des Türflügels der Schiebetür eine der Innenseite des Schiebetürflügels zugeordneten Führungsschiene gegenüber dem Fahrzeuginnenraum im Wesentlichen abtrennt, wobei die Abdeckeinrichtung eine Abdeckbahn aufweist, welche sich im Wesentlichen über die gesamte Längserstreckung der Führungsschiene erstreckt, und wobei die Abdeckbahn an ihren in Fahrzeuglängsrichtung liegenden Endabschnitten jeweils auf einer Wickelwelle aufwickelbar ist, sowie eine Schiebetür eines Kraftfahrzeugs mit zumindest einer der Innenseite eines Schiebetürflügels zugeordneten Führungsschiene, die mit einem Gleitelement in Eingriff steht, welches über einen schwenkbar gelagerten Schwenkhebel mit der Tragstruktur oder der Karosserie des Fahrzeugs verbunden ist und mit einer zuvor beschriebenen Abdeckeinrichtung.

### Stand der Technik

Schiebetüren finden vielfältige Anwendungen in Kraftfahrzeugen, insbesondere in Fahrzeugen des öffentlichen Personenverkehrs, zunehmend aber auch in Großraumlimousinen, die zum Transport von fünf und mehr Personen ausgelegt sind.

Aus der DE 43 15 616 A1 ist eine ausschwenkbare Schiebetür für Fahrzeuge bekannt, an deren Innenseite eines Türflügels, im Wesentlichen im Bereich der horizontalen Mitte, eine horizontal verlaufende Laufschiene angeordnet ist. In diese greift eine Rollenführung ein. Diese Schiebetür ist als außen laufende Schiebetür ausgebildet. Eine Öffnungsbewegung erfolgt dadurch, dass zunächst ein Türflügel nach außen und gleichzeitig schräg nach oben versetzt und anschließend an der Außenwand des Fahrzeugs entlang verschoben wird. Das Anheben des Türflügels erfolgt dabei beispielsweise unter einem Winkel von 45° schräg nach oben. Der Antrieb zum Öffnen und Schließen des Türflügels erfolgt elektromechanisch.

Sämtlichen im Stand der Technik bekannte Schiebetüren für Kraftfahrzeuge ist gemein, dass die entlang der Verschiebebewegung verlaufenden Führungsschienen zumeist im Bereich sowohl eines oberen als auch eines unteren Endabschnitts einer im Wesentlichen in Horizontalrichtung verschiebbaren Tür vorgesehen sind. Bei Personenkraftwagen ist zudem meistens eine der Führungsschienen sichtbar an der Außenseite der Karosserie angeordnet, die in Schließstellung des Türflügels von außen sichtbar ist. Derartige Schiebetürsysteme erfüllen vielfach nicht mehr die heutigen Anforderungen an Formschönheit, Design und Funktionalität.

Ferner sind die im Stand der Technik bekannten Führungssysteme aufgrund der Anordnung eines Führungsmechanismus am oberen Endabschnitt des Türflügels für Cabrio- oder Coupé-Modelle kaum verwendbar. Denn bei solchen Kraftfahrzeugen ist eine rahmenseitig obere Führung einer absenkbaren Fensterscheibe nicht vorgesehen. Mangels eines oberen Türrahmens kommt der Einsatz herkömmlicher Führungssysteme von Schiebetüren für solche Kraftfahrzeuge bisher nicht infrage.

Aus FR 2 888 870 ist eine Vorrichtung zum Abdichten der Öffnung in einer Führungsschiene einer Schiebetür bekannt. Die Abdichtung weist im Wesentlichen ein flexibles Band auf, das zwischen zwei elastisch vorgespannten Aufrollvorrichtungen angeordnet ist.

Aus US 3,605,338 ist eine Schiebetür für Kraftfahrzeuge bekannt. Die Schiebetür weist eine Schiebeführung mit einer Abdeckung auf, die als Armlehne ausgebildet ist.

Aus WO 2008/095728 A1 ist eine Schiebetüre für ein Fahrzeug bekannt. Die Schiebetür weist an ihrer Innenseite eine Führungsschiene auf, die an einem Gleitschlitten längsverschieblich gelagert ist. Es ist eine Abdeckung für die Führungsschiene vorgesehen, die als Jalousie oder Rollo ausgebildet sein kann. Gemäß einer besonderen Ausführung kann darüber hinaus vorgesehen sein, dass sie Abdeckung mit dem Gleitschlitten verbunden ist.

### Aufgabe

Der vorliegenden Erfindung liegt daher die Aufgabe zugrunde, einen Führungsmechanismus für eine Schiebetür eines Kraftfahrzeugs zur Verfügung zu stellen, der auch für Türflügel und Schiebetüren mit rahmenlos gehalterten absenkbaren Fensterscheiben universell geeignet ist. Der Führungsmechanismus soll darüber hinaus besonders einfach in der Montage und Wartung sein. Auch soll der Führungsmechanismus für die Kraftfahrzeuginsassen im Wesentlichen verborgen bzw. verdeckt sein.

### Erfindung und vorteilhafte Wirkungen

Die der Erfindung zugrundeliegende Aufgabe wird mit Hilfe einer Abdeckeinrichtung gemäß Patentanspruch 1 und einer Schiebetür mit einer Abdeckeinrichtung nach Anspruch 10 gelöst. Weitere vorteilhafte Ausführungen der Erfindung sind in den zugehörigen Unteransprüchen angegeben.

Bei der Erfindung ist für die innenseitig am Schiebetürflügel vorgesehene oder daran angeordnete Führungsschiene eine Abdeckeinrichtung vorgesehen. Diese ist dazu ausgebildet, die Führungsschiene des Führungsmechanismus gegenüber dem Fahrzeuginnenraum abzutrennen bzw. abzudecken. Auf diese Art und Weise kann die Führungsschiene bzw. der gesamte Führungsmechanismus für die Fahrzeuginsassen in kaum sichtbarer Weise abgedeckt bzw. verdeckt werden.

Zudem hat eine solche Abdeckeinrichtung den Vorteil, dass die Fahrzeuginsassen nicht etwa unbeabsichtigt mit Fingern oder mit Kleidungsstücken oder dergleichen Gegenständen in den Führungsmechanismus gelangen können. Andernfalls wären Verletzungen oder Beschädigungen von in das Führungssystem gelangenden Gegenständen oder Körperteilen zu befürchten.

Auch verhindert die Abdeckeinrichtung das Eindringen von Staub und Schmutz in den Führungsmechanismus. Sie trägt somit zu einem reibungslosen, wartungsarmen und zuverlässigen Betrieb des gesamten Führungsmechanismus bei.

Dabei ist für die Abdeckeinrichtung eine Abdeckbahn vorgesehen. Diese erstreckt sich im Wesentlichen über die gesamte Längserstreckung der Führungsschiene. Die Längserstreckung der Abdeckbahn entspricht zumindest der Länge des Verfahrwegs des Gleitelements an der Führungsschiene zwischen den beiden Endstellungen, nämlich Öffnungs- und Schließstellung des Türflügels.

Weiterhin ist vorgesehen, dass die Abdeckbahn an ihren in Fahrzeuglängsrichtung liegenden Endabschnitten, bzw. im Bereich der freien Enden der Führungsschiene zu liegen kommenden Endabschnitten jeweils auf einer Wickelwelle aufwickelbar ist. Die voneinander beabstandet angeordneten Wickelwellen sind entgegengesetzt federbeaufschlagt, sodass die Abdeckbahn über die an den Wickelwellen vorgesehene Feder stets unter Spannung gehalten wird. Mittels der federbeaufschlagten Wickelwellen kann die Abdeckbahn nahezu beliebig mit dem Gleitelement oder dem Schwenkhebel relativ zur Führungsschiene des Führungsmechanismus mitbewegt werden.

Die Wickelwellen für die Abdeckbahn sind bezüglich der Führungsschiene des Führungsmechanismus örtlich fixiert. Sie kommen vorzugsweise in Höhe des Bereichs der gegenüberliegenden Endabschnitte der Führungsschiene zu liegen.

Weiterhin ist vorgesehen, dass die Abdeckbahn zwischen den parallel zur Längserstreckung der Führungsschiene voneinander beabstandeten Wickelwellen in einander gegenüberliegenden Führungen geführt ist. Diese Abdeckbahnführungen erstrecken sich zwischen Halterungen oder Lagern für die Wickelwellen der Abdeckbahn. Die Abdeckbahnführungen verlaufen vorzugsweise parallel zur Längserstreckung der Führungsschiene und umgreifen die Abdeckbahn seitlich. Hierfür weisen sie vorzugsweise ein U-förmiges Querschnittsprofil auf, welches jeweils einen Seitenrand der Abdeckbahn umschliesst.

Die Abdeckbahnführungen münden unmittelbar in die Halterungen oder in die Lager für die Wickelwellen. Dabei kann insbesondere vorgesehen sein, dass die Abdeckbahnführungen einstückig mit den endseitigen Halterungen oder Lagern für die Wickelwellen verbunden sind. Während die Abdeckbahnführungen ein im Wesentlichen U-förmiges und senkrecht zur Wickelbahnebene relativ schmales Querschnittsprofil aufweisen, sind die Halterungen zum längsseitigen Ende hin verbreitert ausgebildet. An oder zwischen diesen flanschartig verbreiterten Abschnitten gelangt die Wickelwelle stirnseitig zur Anlage. Die verbreiterten Abschnitte der Halterungen im Bereich der Wickelwellenlagerung stellen somit eine Führung für die Abdeckbahn beim Auf- oder Abwickeln zur Verfügung.

Nach einer ersten vorteilhaften Ausgestaltung der Erfindung weist die Abdeckeinrichtung eine der Länge der Führungsschiene entsprechende Längserstreckung auf. Vorzugsweise erstreckt sich die Abdeckeinrichtung über die gesamte Führungsschiene oder zumindest über den Teil der Führungsschiene, der vom Gleitelement beim Öffnen und Schliessen des Türflügels als Verfahrstrecke aktiv genutzt wird.

Dabei kann vorgesehen werden, dass die Abdeckeinrichtung einzelne elastisch nachgiebige Elemente, wie etwa Bürsten aufweist, die den zum Türinnenraum hin offenen Bereich des Führungsmechanismus verschliessen. Durch diese Bürsten oder eine vergleichbare kammartige Anordnung elastisch nachgiebiger Finger ist der Schwenkhebel hindurch geführt. Auf diese Art und Weise kann erreicht werden, dass einzig die zur Führung erforderlichen Bauteile, nämlich Schwenkhebel und/oder Gleitelement die Abdeckeinrichtung durchstossend oder durchsetzend mit der zugehörigen Führungsschiene in Eingriff gelangen.

Dabei ist insbesondere vorgesehen, dass die Abdeckbahn mit dem Gleitelement oder mit dem Schwenkhebel gekoppelt ist. Die Kopplung ist dabei derart, dass die Abdeckbahn beim Verschieben des Türflügels zwischen Öffnungs- oder Schliessstellung gegenüber der Führungsschiene eine Relativbewegung, vorzugsweise in Richtung der Längserstreckung der Führungsschiene ausführt. Dabei ist insbesondere vorgesehen, dass die Kopplung zwischen der Abdeckbahn und dem Gleitelement oder dem Schwenkhebel zumindest bezüglich des Verschiebewegs des Gleitelements in der Führungsschiene als feste Verbindung ausgebildet ist. Das heisst, die Abdeckbahn ist bezüglich Bewegungen entlang der Führungsschiene starr mit dem Gleitelement oder dem Schwenkhebel gekoppelt. Schräg oder senkrecht zur Führungsschienenerstreckung hingegen kann die Abdeckbahn gegenüber dem Gleitelement und/oder dem Schwenkhebel zumindest in gewissen Grenzen frei beweglich sein.

Nach einer weiteren vorteilhaften Ausgestaltung der Erfindung ist vorgesehen, dass die Abdeckbahn ein Zwischenstück aufweist, welches vom Schwenkarm oder dem Gleitstück des Führungsmechanismus durchsetzt ist. Dieses Zwischenstück weist gegenüber der übrigen Abdeckbahn vorzugsweise eine erhöhte Stabilität und Festigkeit auf. Es dient der Bewegungskopplung von Gleitstück oder Schwenkarm mit der Abdeckbahn. Wird beim Öffnen oder Schliessen des Türflügels das Gleitstück in der Führungsschiene verschoben, so wird diese Relativbewegung über das Zwischenstück auf die Abdeckbahn unmittelbar übertragen. Insoweit stellt das Zwischenstück eine Mitnehmerfunktion und eine Bewegungskopplung von Gleitstück oder Schwenkarm mit der Abdeckbahn zur Verfügung.

Das Zwischenstück ist vorzugsweise flächenbündig in die Abdeckbahn integriert und weist eine an die Geometrie des Schwenkarms oder des Gleitstücks angepasste Durchgangsöffnung auf. Diese ist derart ausgebildet, dass das Zwischenstück den Schwenkarm oder das Gleitstück spielfrei aufnimmt.

Weiterhin kann vorgesehen sein, dass das Zwischenstück mit der Abdeckbahn durch Verkleben, Vulkanisieren und/oder mittels Umspritzen oder Einspritzen in die Abdeckbahn mit dieser verbunden ist. Dabei kann weiterhin vorgesehen sein, dass die Abdeckbahn angrenzend an das Zwischenstück über ihre gesamte Breite mit dem Zwischenstück verbunden ist. Es kann aber auch vorgesehen sein, dass die Abdeckbahn durchgehend ausgebildet ist und das Zwischenstück lediglich eine abschnittsweise Strukturverstärkung zur Verfügung stellt, folglich also nur abschnittsweise, vorzugsweise in der Mitte zwischen den Seitenrändern der Abdeckbahn eine strukturversteifte Durchgangsöffnung für den Schwenkarm oder das Gleitstück zur Verfügung stellt.

Des Weiteren kann vorgesehen sein, dass die Längserstreckung des Zwischenstücks parallel zur Längserstreckung der Abdeckbahnführungen bzw. der Führungsschiene verhältnismässig kurz ist, da sich das Zwischenstück aufgrund seiner strukturversteifenden Ausgestaltung nur bedingt zum Aufwickeln auf die Wickelwelle eignet. Das Zwischenstück ist somit in jeder möglichen Position des Schiebetürflügels zwischen den endseitigen Wickelwellen positioniert. Damit der Abstand der beiden Wickelwellen bzw. Wickelwellenhalterungen möglichst klein gehalten werden kann, ist es von Vorteil, wenn die Längserstreckung des Zwischenstücks auf jeder Seite des ihn durchsetzenden Schwenkarms etwa der Breite der Abdeckbahn entspricht.

Nach einer weiteren vorteilhaften Ausgestaltung der Erfindung ist vorgesehen, dass die Abdeckbahn eine Kunststofffolie aufweist, die besonders einfach in der Montage und kostengünstig in der Herstellung ist. Zudem kann eine solche Kunststofffolie mit einer Oberflächenbeschaffenheit versehen werden, die an die Kontur bzw. die Beschaffenheit der umgebenden Türinnenverkleidung angepasst ist.

Weiterhin ist vorgesehen, dass zumindest eine für die Abdeckbahn vorgesehene Führung unmittelbar an der Führungsschiene für das Gleitelement angeordnet ist. Die Abdeckbahnführungen und die Führungsschiene verlaufen im Wesentlichen parallel zueinander und zumindest eine unmittelbar an der Führungsschiene angeordnete Abdeckbahnführung kann insbesondere einstückig mit der Führungsschiene verbunden sein oder aber die Abdeckbahnführung kann unmittelbar in der Führungsschiene für das Gleitelement integriert sein.

So ist beispielsweise denkbar, dass die Führungsschiene für das Gleitelement, welche im Wesentlichen ein U-förmiges Profil aufweist, an einem etwas verbreitert ausgebildeten Profilschenkel stirnseitig eine weitere Führungsnut für die Abdeckbahn hat.

Weiterhin ist vorgesehen, die gesamte Abdeckeinrichtung, nämlich die Abdeckbahn, die Abdeckbahnführungen sowie die zugehörigen Wickelwellen und Halterung unterhalb einer Armlehne der Türinnenverkleidung anzuordnen. Bei einer solchen Ausführung ist insbesondere vorgesehen, dass auch die Führungsschiene für den Führungsmechanismus unterhalb der Armlehne der Türinnenverkleidung angeordnet ist oder von dieser überdeckt wird. Auf diese Art und Weise kann bereits durch die Anordnung der Führungsschiene und der zugehörigen Abdeckeinrichtung unterhalb einer Armlehne eine für den Fahrzeuginsassen möglichst verborgende Anordnung des Führungs- bzw. Abdeckmechanismus zur Verfügung gestellt werden.

Nach einem weiteren unabhängigen Aspekt betrifft die Erfindung eine Schiebetür mit einer zuvor beschriebenen Abdeckeinrichtung für den Führungsmechanismus. Die erfindungsgemäße Schiebetür weist einen Türflügel und eine dem Türflügel zugeordnete Führungsschiene auf. Diese Führungsschiene steht mit einem Gleitelement in Eingriff. Das Gleitelement ist über einen schwenkbar gelagerten Schwenkhebel mit der Tragstruktur bzw. mit der Karosserie des Fahrzeugs verbunden. Vorzugsweise befindet sich das Gleitelement an einem freien Endabschnitt des mittels seines anderen Endabschnitts an der Karosserie oder an der Tragstruktur angelenkten Schwenkhebels. Die Abdeckeinrichtung weist zumindest eine Abdeckbahn auf, die auf voneinander beabstandet angeordneten Wickelwellen aufgerollt ist. Mittels dieser federbelasteten Wickelwellen wird die Abdeckbahn auf Spannung gehalten. Zudem ist sie von einem mit der Führungsschiene des Führungsmechanismus in Eingriff stehenden Schwenkarm durchsetzt, sodass sie bei einer Öffnungs- oder Schliessbewegung des Türflügels einer Führung des Schwenkarms in der Führungsschiene entsprechend mitbewegt wird und die übrigen Abschnitte des Führungsmechanismus gegenüber dem Kraftfahrzeuginnenraum abtrennt, separiert und verschliesst.

### Ausführungsbeispiel

Weitere Merkmale, Ziele sowie vorteilhafte Wirkungen der Erfindung sind in der nachfolgenden Beschreibung eines Ausführungsbeispiels wiedergegeben. Dabei bilden sämtliche beschriebenen und/oder bildlich dargestellten Merkmale in ihrer sinnvollen Kombination den Gegenstand der vorliegenden Erfindung.

Es zeigen:
- Fig. 1: eine perspektivische Darstellung der Innenseite eines Türflügels,
- Fig. 2: eine schematische Darstellung des Führungsmechanismus des Türflügels,
- Fig. 3: eine perspektivische Darstellung der Abdeckeinrichtung mit unterschiedlichen Türflügelpositionen,
- Fig. 4: eine Querschnittsdarstellung des Türflügels,
- Fig. 5: eine vergrößerte Darstellung des oberen Führungsmechanismus und der Abdeckeinrichtung gemäß Fig. 4 und
- Fig. 6a bis 6d: eine perspektivische Darstellung des Türflügels und der Abdeckeinrichtung in unterschiedlichen Türöffnungspositionen.

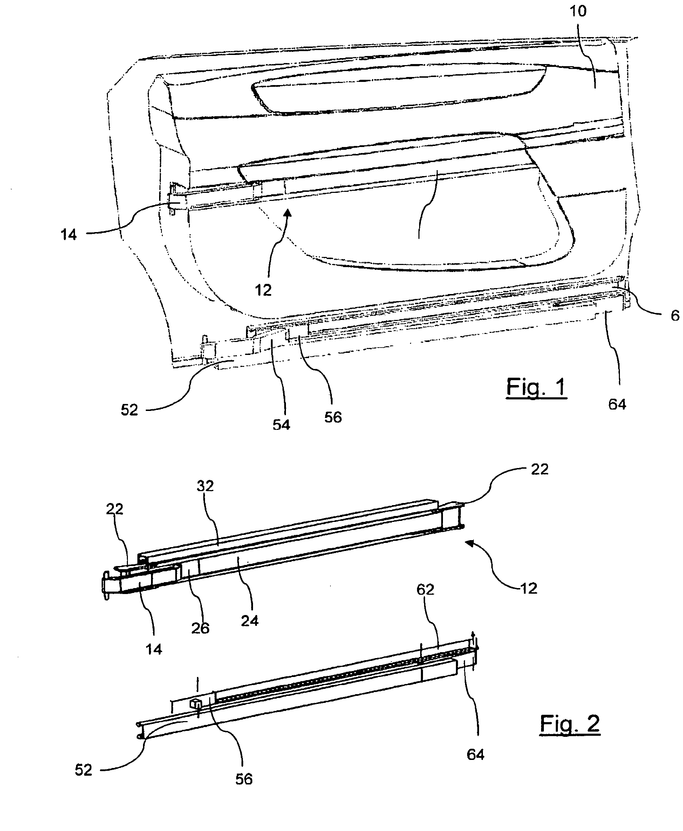

In Figur 1 ist in einer perspektivischen Ansicht der Türflügel 10 einer Schiebetür eines Kraftfahrzeugs dargestellt. Der Türflügel 10 weist zwei türflügelseitig angeordnete Führungsschienen 12, 62 auf, während karosserieseitig eine weitere Führungsschiene 52 vorgesehen ist. In den Führungsschienen sind Gleitelemente 18, 56 geführt, die über Schwenkarme 14, 54, 64 wechselseitig entweder an der Kraftfahrzeugkarosserie oder am Türflügel angelenkt sind. Die unteren, im Schwellerbereich vorgesehenen Führungsschienen 62, 52 und zugehörigen Gleitelemente 56 bilden eine parallelogrammartige Anordnung.

Die Führungsschiene 62 ist an der Innenseite des Türflügels 10 angeordnet. Das zugehörige Gleitelement 56 ist über einen Schwenkarm 54 karosserie- oder tragstrukturseitig angelenkt. Genau umgekehrt verhält es sich mit der anderen im Schwellerbereich angeordneten Führungsschiene 52. In dieser ist ein in den Figuren nicht explizit dargestelltes Gleitelement verschiebbar angeordnet, welches über einen Schwenkarm 64 mit dem Türflügel 10 gekoppelt ist.

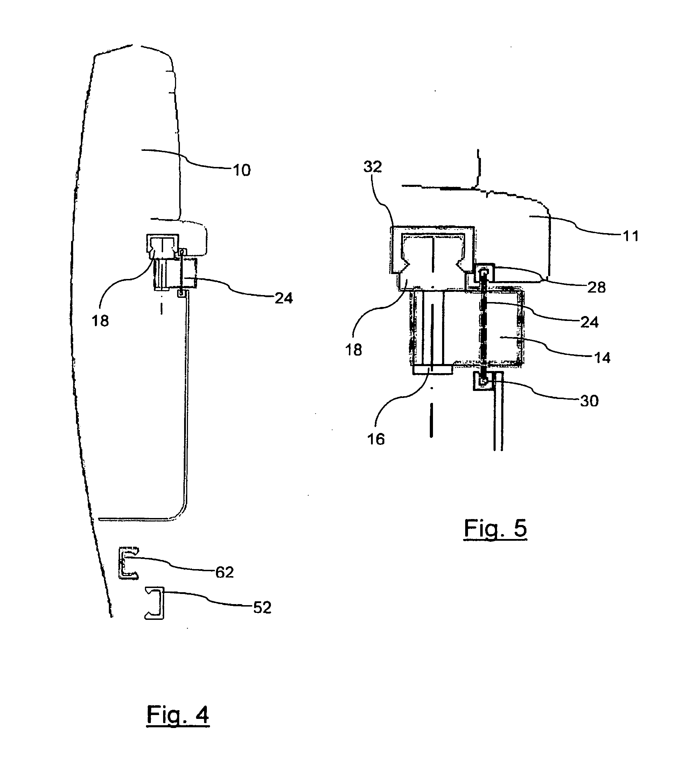

Des Weiteren ist im Gürtellinienbereich des Türflügels an der Innenseite des Türflügels eine weitere Führungsschiene 32 vorgesehen, in der ein, wie in Figur 4 gezeigt, ein Gleitelement 18 verschiebbar geführt ist. Dieses in Figur 1 nicht explizit dargestellte Gleitelement 18 ist über einen Schwenkhebel 14 mit der Kraftfahrzeugkarosserie oder mit der Tragstruktur des Kraftfahrzeugs verbunden.

Beim Öffnen des Türflügels oder der Schiebetür wird diese durch eine Schwenkbewegung der insgesamt drei Schwenkarme 14, 54, 64 in eine gegenüber der Kraftfahrzeugkarosserie ausgestellte Position verschwenkt, aus welcher heraus die Gleitelemente 18, 56 in den zugehörigen Führungsschienen 32, 62, 52 verschoben werden können.

Da sämtliche Führungsschienen 32, 52, 62 bzw. Funktionsteile des Führungsmechanismus des Türflügels unterhalb einer Fensteröffnung der Schiebetür angeordnet sind und die obere Führungsschiene 32 unmittelbar in die Innenverkleidung des Türflügels 10 integriert ist, ist eine Abdeckeinrichtung 12 für diese obere Führungseinheit vorgesehen.

Die Abdeckeinrichtung 12 erstreckt sich im Wesentlichen über die gesamte Länge der oberen Führungsschiene 32, wie dies insbesondere aus Figur 2 hervorgeht. Sie weist zwei im Wesentlichen parallel zueinander und parallel zur Führungsschiene 32 verlaufende obere und untere Führungsprofile 28, 30 auf, in denen eine Abdeckbahn 24 oder ein Abdeckrollo verschiebbar geführt ist. Die Abdeckbahn 24 ist an den längsseitigen Enden der Abdeckeinrichtung 12 auf jeweils einer federbelasteten Wickelwelle 34, 36 aufgerollt. Die federbelasteten Wickelwellen bewirken, dass die biegsame und verformbare Abdeckbahn 24 stets auf Spannung gehalten ist und dass die Abdeckbahn zusammen mit dem Schwenkhebel 14 oder mit dem in der Führungsschiene 32 gelagerten Gleitelement 18 gegenüber der Führungsschiene 32 mit bewegt werden kann.

Hierzu ist insbesondere an der Abdeckbahn 24 ein Zwischenstück 26 vorgesehen, die ein gegenüber der Abdeckbahn 24 verstärktes oder strukturversteiftes Material aufweist. Dieses Zwischenstück 26 weist ferner eine Durchgangsöffnung für den Schwenkhebel 14 auf, der auf diese Art und Weise die Abdeckbahn 24 durchsetzend mit dem auf der anderen Seite der Abdeckbahn 24 liegenden Gleitelement 18 über einen Lagerbolzen 16 verbunden ist.

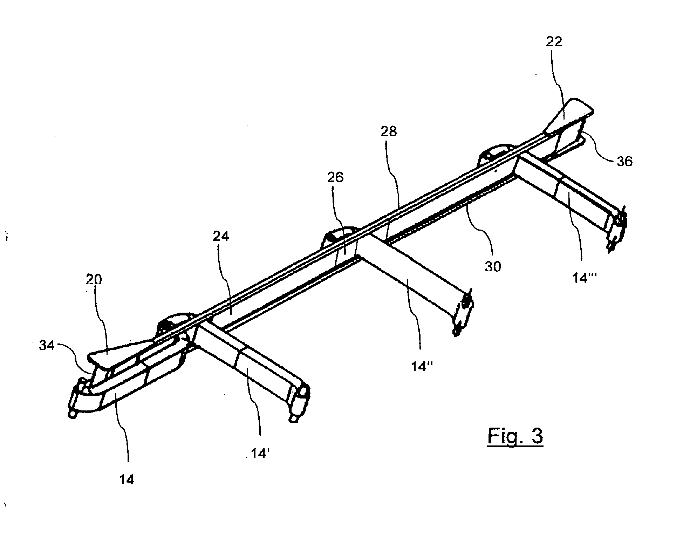

Figur 3 zeigt insgesamt vier verschiedene Stellungen des Schwenkhebels 14, 14', 14'' und 14"', die sukzessive die einzelnen Positionen des Schwenkhebels 14 beim Öffnen der Schiebetür andeuten.

Die Wickelwellen 34, 36 sind in Halterungen 20, 22 gelagert. Diese, zum freien Endabschnitt der Abdeckeinrichtung hin verbreitert ausgebildeten Halterungen stellen eine seitliche Führung für die aufzuwickelnde Abdeckbahn 24 dar.

In Figur 5 ist ferner die Integration der Führungsschiene 32 in die Armlehne 11 einer Türinnenverkleidung angedeutet. Die zugehörige Abdeckeinrichtung 12 mit ihrem Abdeckrollo 24 schließt unmittelbar an den unteren Endabschnitt der Armlehne 11 an, sodass dieser Bereich für die Fahrzeuginsassen im Wesentlichen unbeachtet und schlecht einsehbar bleibt.

In Figur 5 ist zudem deutlich zu erkennen, dass die Abdeckbahn 24 an ihren oberen und randseitigen Abschnitten jeweils von einer zugehörigen Abdeckbahnführung 28, 30 umfasst ist.

Die in Figur 5 oben liegende Abdeckbahnführung 28 ist dabei unmittelbar mit der Führungsschiene 32 verbunden. Alternativ kann sie auch unmittelbar in die Führungsschiene 32 integriert sein.

Auch ist denkbar, die Führungsschiene 32 als eine nach oben offene Führungsschiene auszubilden, die dann entsprechend mit der unteren Abdeckbahnführung 30 zur Anlage gelangt. Es ist ferner im Rahmen der Erfindung, dass die Führungsschiene 32 ähnlich wie die Führungsschiene 62 zur Seite hin geöffnet angeordnet ist, und dass sich die Abdeckeinrichtung 12, insbesondere aber die Abdeckbahn 24 entsprechend um 90° gedreht ausgerichtet ist, sodass der Schwenkarm 14 die Abdeckeinrichtung 12 nicht horizontal, sondern vertikal durchsetzt.

Es ist weiterhin denkbar, dass auch in der Konfiguration gemäß Figur 5 die Abdeckeinrichtung 12, insbesondere aber das Abdeckrollo 24 nicht vertikal, sondern im Wesentlichen horizontal ausgerichtet ist und vom Lagerbolzen 16 anstelle vom Schwenkhebel 14 durchsetzt wird.

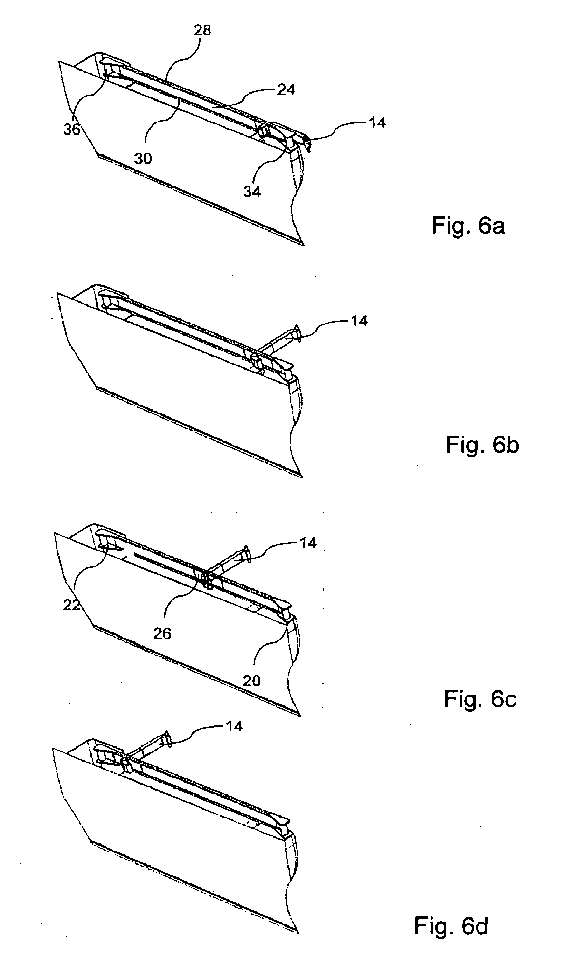

Die Figuren 6a bis 6d zeigen ferner sukzessive die einzelnen Positionen des Zwischenstücks 26 und des Schwenkhebels 14 bei einem Öffnungsvorgang des Türflügels. Dabei entsprechen die in den Figuren 6a bis 6d gezeigten Positionen im Wesentlichen den in der Figur 3 wiedergegebenen Positionen des Schwenkarms 14, 14', 14" und 14"'.

In Figur 6a befindet sich die Tür in ihrer Schließstellung. Der Schwenkhebel 14 erstreckt sich im Wesentlichen parallel zur Abdeckeinrichtung 12. Sobald die Öffnungsbewegung eingeleitet ist, wird der gesamte Türflügel über die Schwenkhebel 14, 54, 64 in die in Figur 6b gezeigt Position überführt. Danach wird der Türflügel weiter nach rechts geschoben, sodass der Schwenkhebel 14 und das daran angelenkte Gleitstück 18 in der Führungsschiene 32 weiter nach links wandert, bis die Tür ihre Endanschlags- bzw. Öffnungsposition in Figur 6d erreicht hat.

In Figuren 6a bis 6d ist der gegenüber der Kraftfahrzeugkarosserie verschiebbare Türflügel als Bezugssystem gewählt. Insoweit bewegt sich der Schwenkhebel 14 gegenüber dem vermeintlich feststehenden Türflügel. In der Praxis ist dies jedoch umgekehrt. Der Schwenkhebel 14 ist mit seinem, dem Türflügel abgewandten Anlenkpunkt ortsfest an der Karosserie des Fahrzeuges befestigt, sodass der Türflügel 10 ausgehend von der Darstellung gemäß Figur 6a bis zur Darstellung nach Figur 6d sukzessive nach rechts in seine Öffnungsstellung überführt wird.

### Bezugszeichenliste

- 10: Türflügel
- 11: Türinnenverkleidung/Armlehne
- 12: Abdeckeinrichtung
- 14: Schwenkhebel
- 16: Lagerbolzen
- 18: Gleitelement
- 20: Halterung
- 22: Halterung
- 24: Abdeckbahn/Abdeckrollo
- 26: Zwischenstück
- 28: Führung
- 30: Führung
- 32: Führungsschiene
- 34: Wickelwelle
- 36: Wickelwelle
- 52: Führungsschiene
- 54: Schwenkhebel
- 56: Gleitstück
- 62: Führungsschiene
- 64: Schwenkhebel

## Patentansprüche

1. Abdeckeinrichtung (12) von Führungsteilen einer Schiebetür eines Kraftfahrzeugs, die zumindest in Schließstellung des Türflügels der Schiebetür eine der Innenseite des Schiebetürflügels zugeordneten Führungsschiene (32) gegenüber dem Fahrzeuginnenraum im Wesentlichen abtrennt, wobei die Abdeckeinrichtung (12) eine Abdeckbahn (24) aufweist, welche sich im Wesentlichen über die gesamte Längserstreckung der Führungsschiene (32) erstreckt, und wobei die Abdeckbahn (24) an ihren in Fahrzeuglängsrichtung liegenden Endabschnitten jeweils auf einer Wickelwelle (34,36) aufwickelbar ist, **dadurch gekennzeichnet, dass** die Abdeckbahn (24) zwischen den Wickelwellen (34, 36) in gegenüberliegenden Führungen (28, 30) geführt ist, welche sich zwischen Halterungen (20, 22) für die Wickelwellen (34, 36) erstrecken.

2. Abdeckeinrichtung (12) nach Anspruch 1, wobei die Abdeckeinrichtung (12) eine der Länge der Führungsschiene (32) entsprechende Längserstreckung aufweist.

3. Abdeckeinrichtung (12) nach einem der Ansprüche 1 oder 2, wobei die Abdeckbahn (24) mit dem Gleitelement (18) oder mit dem Schwenkhebel (14) gekoppelt ist.

4. Abdeckeinrichtung (12) nach einem der vorhergehenden Ansprüche 1 bis 3, wobei die Abdeckbahn beim Verschieben des Türflügels (10) in seine Öffnungs- oder Schließstellung bezogen auf die Führungsschiene eine Relativbewegung ausführt.

5. Abdeckeinrichtung (12) nach einem der vorhergehenden Ansprüche 1 bis 4, wobei die Abdeckbahn (24) ein Zwischenstück (26) aufweist, welches vom Schwenkarm (14) oder dem Gleitstück (18) durchsetzt ist.

6. Abdeckeinrichtung (12) nach Anspruch 5, wobei das Zwischenstück (26) flächenbündig in die Abdeckbahn (24) integriert ist und eine an die Geometrie des Schwenkarms (14) oder des Gleitstücks (18) angepasste Durchgangsöffnung aufweist.

7. Abdeckeinrichtung (12) nach einem der vorhergehenden Ansprüche 5 oder 6, wobei das Zwischenstück (26) mit der Abdeckbahn (24) durch Verkleben, Vulkanisieren und/oder Um- oder Einspritzen mit der Abdeckbahn (24) verbunden ist.

8. Abdeckeinrichtung (12) nach einem der vorhergehenden Ansprüche 1 bis 7, wobei die Abdeckbahn (24) eine Kunststofffolie mit einer an die Türinnenverkleidung angepassten Außenkontur und/oder Oberflächenbeschaffenheit aufweist.

9. Abdeckeinrichtung (12) nach einem der vorhergehenden Ansprüche, wobei zumindest eine für die Abdeckbahn (24) vorgesehenen Führungen (28, 30) unmittelbar an der Führungsschiene (32) angeordnet ist.

10. Schiebetür eines Kraftfahrzeugs mit zumindest einer an der Innenseite eines Schiebetürflügels zugeordneten Führungsschiene (32), die mit einem Gleitelement (18) in Eingriff steht, welches über einen schwenkbar gelagerten Schwenkhebel (14) mit der Tragstruktur oder der Karosserie des Fahrzeugs verbunden ist und mit einer Abdeckeinrichtung (12) gemäß einem der vorhergehenden Ansprüche.

## Claims

1. A covering device (12) of guide parts of a sliding door of a motor vehicle, which substantially separates a guide rail (32) against the interior of the vehicle in the closing position of the door wing, which guide rail (32) is associated with an inner side of the sliding door wing, wherein the covering device (12) comprises a covering sheet (24) which substantially extends over the entire longitudinal extension of the guide rail (32), and wherein the covering sheet (24) can respectively be wound up on a winding shaft (34, 36) at its end sections situated in the longitudinal direction of the vehicle, **characterized in that** the covering sheet (24) is guided between the winding shafts (34, 36) in opposite guides (28, 30) which extend between retainers (20, 22) for the winding shafts (34, 36).

2. A covering device (12) according to claim 1, wherein the covering device (12) has a longitudinal extension corresponding to the length of the guide rail (32).

3. A covering device (12) according to one of the claims 1 or 2, wherein the covering sheet (24) is coupled to the sliding element (18) or the pivoting lever (14).

4. A covering device (12) according to one of the preceding claims 1 to 3, wherein the covering sheet carries out a relative movement relating to the guide rail during the displacement of the door wing (10) to its open or closed position.

5. A covering device (12) according to one of the preceding claims 1 to 4, wherein the.covering sheet (24) comprises an intermediate element (26) which is penetrated by the swivel arm (14) or the slide (18).

6. A covering device (12) according to claim 5, wherein the intermediate element (26) is integrated in a flush manner in the covering sheet (24) and comprises a through-hole adjusted to the geometry of the swivel arm (14) or the slide (18).

7. A covering device (12) according to one of the preceding claims 5 or 6, wherein the intermediate element (26) is connected to the covering sheet (24) by gluing, vulcanizing and/or extrusion-coating or injection-molding with the covering sheet (24).

8. A covering device (12) according to one of the preceding claims 1 to 7, wherein the covering sheet (24) comprises a plastic film with an exterior contour and/or surface finish which is adjusted to the interior trim of the door.

9. A covering device (12) according to one of the preceding claims, wherein at least one of the guides (28, 30) provided for the covering sheet (24) is directly arranged on the guide rail (32).

10. A sliding door of a motor vehicle, comprising at least one guide rail (32) arranged on the inner side of a sliding door wing, which guide rail (32) is in engagement with a sliding element (18) which is connected to the support structure or the body of the vehicle via a pivotably mounted pivoting lever (14), and comprising a covering device (12) according to one of the preceding claims.

## Revendications

1. Dispositif de couverture (12) de parties de guidage d'une porte coulissante d'un véhicule à moteur, qui sépare pour l'essentiel, au moins dans la position de fermeture du vantail de la porte coulissante, un rail de guidage (32) associé à la face intérieure du vantail de la porte coulissante de l'intérieur du véhicule, le dispositif de couverture (12) présentant une bande de couverture (24) qui s'étend pour l'essentiel sur toute la longueur du rail de guidage (32), et la bande de couverture (24) pouvant être enroulée à chacune de ses extrémités dans le sens de la longueur de véhicule sur un arbre d'enroulement (34, 36), **caractérisé en ce que** la bande de couverture (24) est guidée entre les arbres d'enroulement (34, 36) dans des guides (28, 30) opposés, qui s'étendent entre des fixations (20, 22) pour les arbres d'enroulement (34, 36).

2. Dispositif de couverture (12) selon la revendication 1, dans lequel le dispositif de couverture (12) présente une étendue en longueur correspondant à la longueur du rail de guidage (32).

3. Dispositif de couverture (12) selon l'une des revendications 1 ou 2, dans lequel la bande de couverture (24) est couplée avec l'élément coulissant (18) ou avec le levier pivotant (14).

4. Dispositif de couverture (12) selon l'une des revendications 1 à 3, dans lequel la bande de couverture exécute un mouvement relatif par rapport au rail de guidage lors du déplacement du vantail de porte (10) vers sa position ouverte ou fermée.

5. Dispositif de couverture (12) selon l'une des revendications 1 à 4, dans lequel la bande de couverture (24) présente une pièce intercalaire (26) qui est traversée par le bras pivotant (14) ou par le coulisseau (18).

6. Dispositif de couverture (12) selon la revendication 5, dans lequel la pièce intercalaire (26) est intégrée dans la bande de couverture (24) en affleurement à la surface et présente une ouverture de passage adaptée à la géométrie du bras pivotant (14) ou du coulisseau (18).

7. Dispositif de couverture (12) selon l'une des revendications 5 ou 6, dans lequel la pièce intercalaire (26) est assemblée avec la bande de couverture (24) par collage, vulcanisation et/ou enrobage ou inclusion par injection dans la bande de couverture (24).

8. Dispositif de couverture (12) selon l'une des revendications 1 à 7, dans lequel la bande de couverture (24) présente un film plastique avec un contour extérieur et/ou une texture de surface adaptée à l'habillage intérieur de la porte.

9. Dispositif de couverture (12) selon l'une des revendications précédentes, dans lequel au moins un des guides (28, 30) prévus pour la bande de couverture (24) est disposé directement sur le rail de guidage (32).

10. Porte coulissante d'un véhicule à moteur avec au moins un rail de guidage (32) associé à la face intérieure d'un vantail de porte coulissante, qui est en, prise avec un élément coulissant (18) qui est relié par un levier pivotant (14), supporté de façon pivotante, à la structure portante ou à la carrosserie du véhicule, et avec un dispositif de couverture (12) selon l'une des revendications précédentes.
